(19) Europäisches Patentamt

European Patent Office

Office européen des brevets

(11) EP 0 792 848 A1

## (12) EUROPEAN PATENT APPLICATION

(43) Date of publication:
03.09.1997 Bulletin 1997/36

(51) Int. Cl.$^6$: C04B 7/52, C04B 7/42

(21) Application number: 97103016.8

(22) Date of filing: 25.02.1997

(84) Designated Contracting States:
AT BE DE DK ES FI FR GB GR IE IT LU NL PT SE

(30) Priority: 01.03.1996 DK 229/96

(71) Applicant: F.L. Smidth & Co. A/S
2500 Valby (DK)

(72) Inventor: Borgholm, Hans Erik
2500 Valby (DK)

(54) **Method for manufacturing cement**

(57) The invention relates to a method for enhancing the early-strength characteristics of a cement manufactured from cement clinker subjected to grinding in a cement mill which produces a steep particle size distribution curve.

A mineraliser in the form of a sulphur compound is added to the raw meal in order to enhance the early-strength characteristics. The content of the sulphurous compound must be significantly higher than the content of alkali oxide in the raw material.

Cement mills producing a steep particle size distribution curve and where it will be possible to enhance the quality of the cement in accordance with the present invention include vertical mills, roller presses and ring roller mills.

EP 0 792 848 A1

Printed by Rank Xerox (UK) Business Services
2.14.12/3.4

## Description

The present invention relates to a method for enhancing the quality of cement when cement clinker is ground in a mill which produces a steep particle size distribution curve, which, for example, is the case in a roller press, a ring roller mill or a vertical mill.

Roller presses, ring roller mills and vertical mills have a relatively low energy consumption as compared to, for example, ball mills, and this feature makes them particularly attractive. This also applies to roller presses and ring roller mills.

However, despite their attractions in terms of energy consumption, these mills do have drawbacks when used for grinding of clinker, such as a relatively steep particle size distribution curve of the ground product and when using cold clinker, the temperature in the mill is too low to cause the gypsum ($CaSO_4$ $2H_2O$) which is added to the clinker to dehydrate to hemihydrate and anhydrite.

Because of the steep particle size distribution curve of the cement, there will be a relatively high degree of homogeneity of the particle size of the ground product, and, among other things, this will result in relatively low early-strength characteristics of the cement when it is used in concrete. The previous strength characteristics are normally caused by the finest fraction of the ground clinker given that this is the most reactive fraction.

In the cement mill, a process involving mixing and grinding of the gypsum occurs simultaneously with the grinding of the clinker. Gypsum is added to regulate the setting time and as a means of enhancing the strength characteristics. During the grinding process a complete or partial dehydration of the gypsum normally occurs as a result of the temperature rise which takes place in the cement mill. Initially, the gypsum dehydrates to hemihydrate through the loss of 1½ moles of water of crystallisation and subsequently to soluble anhydrite. This dehydration is a reversible reaction.

An appropriate degree of dehydration of the gypsum in the mill will result in enhanced strength characteristics and a properly controlled setting process. In, for example, roller presses and ring roller mills this is a problem due to the fact that the energy input to these mills is so small that the temperature rise occurring during the clinker grinding process is insufficient to achieve the desired degree of dehydration of the gypsum when the clinker input is cold as is the case after a prolonged period of storage.

A previously suggested solution to this problem involves dehydration of the gypsum prior to its introduction into the cement mill.

It is the object of the present invention to provide a method for manufacturing cement with sufficient early-strength characteristics based on the use of a mill with a relatively steep particle size distribution curve, for example a roller press, a ring roller mill or a vertical mill, for grinding the cement clinker.

According to the invention this objective is achieved by adding a sufficient quantity of sulphate-containing compound to the raw meal prior to its introduction into the combustion chamber or during the combustion process itself.

The addition of the sulphate-containing connection, which is also referred to as a mineraliser, will cause the cement to develop higher early-strength characteristics, and, therefore, the addition of the sulphate compound will compensate for the absence of early-strength characteristics due to the steep particle size distribution curve.

In order to achieve the desired effect, the amount of sulphate contained in the calcined raw meal must be significantly higher than the content of alkali oxide.

Compliance with the following formula must be ensured to maximum practicable extent (the percentages indicated are percentage by weight):

$$\%SO_3 > \%K_2O + 1.5 \cdot \%Na_2O$$

- where the $SO_3$ percentage is the total content of sulphate in the material streams into the process.

A further advantage of the method according to the invention is that the need for dehydration of gypsum in the cement mill is eliminated in that the present sulphate compound which is sintered together with the cement clinker - and, therefore, does not require additional dehydration - substitutes the gypsum which is normally fed to the cement mill.

Typically, the $SO_3$ content in the clinker is of the order 2.5 per cent and may, in principle, originate from any type of sulphates. It is particularly appropriate to utilise calcium sulphate, either naturally occurring or as industrial by-products and distinct waste products, e.g. in the form of a used absorbent from a dry exhaust gas desulphurization process. The sulphate-containing compound may also be added in the form of sulphurous fuel or raw materials which contain sulphite or pyrite.

## Claims

1. A method for enhancing the early-strength characteristics of a cement manufactured from cement clinker subjected to grinding in a cement mill which produces a steep particle size distribution curve for the manufactured cement **CHARACTERISED IN THAT** a sufficient quantity of a sulphurous compound is added to the clinker raw materials before or during the burning/sintering process.

2. A method according to claim 1 **CHARACTERISED IN THAT** the $SO_3$ content in the calcined raw meal is significantly higher than the content of alkali oxide.

3. A method according to claim 2 **CHARACTERISED IN THAT** the weight percentage $SO_3$ in the calcined raw meal is greater than:

$$wt\%K_2O + 1.5 \cdot wt\%Na_2O$$

4. A method according to claim 1 **CHARACTERISED IN THAT** the cement mill is a mill in which a relatively small amount of energy is produced

5. A method according to claim 1 **CHARACTERISED IN THAT** the cement mill is a ring roller mill.

6. A method according to claim 1 **CHARACTERISED IN THAT** the cement mill is a roller press.

**European Patent Office**

# EUROPEAN SEARCH REPORT

Application Number

EP 97 10 3016

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | CHEMICAL ABSTRACTS, vol. 113, no. 24, 10 December 1990 Columbus, Ohio, US; abstract no. 217024x, YE RUILUN ET AL.: "Rapid-setting, superhigh-strength portland cement" XP000191157 * abstract * | 1,4,5 | C04B7/52 C04B7/42 |
| A | & CN 1 042 530 A 30 May 1990 --- | 2,3,6 | |
| Y | ZEMENT, KALK, GIPS, vol. 35, no. 8, 1982, WIESBADEN DE, pages 425-431, XP002032891 WESSEL H. F.: "Qualitätseigenschaften von auf einer Walzenschüsselmühle gemahlen zementen" * abstract * | 1,4,5 | |
| A | * page 426 - page 427 * * page 431, right-hand column * --- | 2,3,6 | |
| A | DE 39 15 432 A (KLÖCKNER-HUMBOLDT-DEUTZ AG) * the whole document * --- | 1-6 | **TECHNICAL FIELDS SEARCHED (Int.Cl.6)**<br><br>C04B |
| A | FR 2 186 442 A (UNITED STATES GYPSUM CO) * claims 1,18-25 * * example 1 * --- | 1-6 | |
| A | GB 2 206 876 A (F L SMIDTH & CO. A/S) * page 2, line 3 - line 14 * * claim 1 * --- | 1-4,6 | |
| A | EP 0 549 135 A (F.L. SMIDTH & CO. A/S) --- | | |
| | -/-- | | |

The present search report has been drawn up for all claims

| Place of search | Date of completion of the search | Examiner |
|---|---|---|
| THE HAGUE | 12 June 1997 | Rigondaud, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | European Patent Office | **EUROPEAN SEARCH REPORT** | Application Number EP 97 10 3016 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | PATENT ABSTRACTS OF JAPAN vol. 015, no. 306 (C-0856), 6 August 1991 & JP 03 115144 A (UBE IND LTD), 16 May 1991, * abstract * ----- | | |
| | | | **TECHNICAL FIELDS SEARCHED** (Int.Cl.6) |

The present search report has been drawn up for all claims

| Place of search | Date of completion of the search | Examiner |
|---|---|---|
| THE HAGUE | 12 June 1997 | Rigondaud, B |